# EUROPÄISCHE PATENTANMELDUNG

(11) **EP 0 641 054 A1**
(43) Veröffentlichungstag der Anmeldung: **01.03.1995**
(21) Anmeldenummer: 94113484.3
(22) Anmeldetag: 29.08.1994
(51) Int. Cl.: H02G 11/00

(54) **Zugentlastungsvorrichtung für eine Leitungsführungsanordnung**

(30) Priorität: 30.08.1993 DE 9313011 U
(71) Anmelder: W.L. GORE & ASSOCIATES, D-85640 Putzbrunn (DE)
(72) Erfinder: Trieb, Karl-Heinz, D-91710 Gunzenhausen (DE); Steff, Josef, D-91802 Meinheim (DE)
(74) Vertreter: Klunker . Schmitt-Nilson . Hirsch

(57) **Zusammenfassung**

Zugentlastungsvorrichtung (10) für eine Leitungsführungsanordnung (51) mit einem Leitungskanal (22) für mindestens eine im Leitungskanal (22) geführte Leitung (23, 24) mit einer ersten kraftschlüssig wirkenden Verbindungseinrichtung (13, 15, 17; 14, 16, 17) zur Verbindung einer an die Leitung(en) (23, 24) anzuschließenden Geräteeinrichtung mit dem Leitungskanal (22) und einer weiteren kraftschlüssig wirkenden Verbindungseinrichtung (20) zur Verbindung der Leitung(en) (23, 24) mit der ersten Verbindungseinrichtung, wobei die weitere Verbindungseinrichtung aus einer weichelastischen, oberflächenstumpfen, den radialen Zwischenraum zwischen der bzw. den Leitung(en) und der ersten Verbindungseinrichtung ausfüllenden Materialeinlage (20) gebildet ist.

## Beschreibung

Die vorliegende Erfindung betrifft eine Zugentlastungsvorrichtung für eine Leitungsführungsanordnung mit einem Leitungskanal für mindestens eine im Leitungskanal geführte Leitung, mit einer ersten kraftschlüssig wirkenden Verbindungseinrichtung zur Verbindung einer an die Leitung(en) anzuschließenden Geräteeinrichtung mit dem Leitungskanal und einer weiteren kraftschlüssig wirkenden Verbindungseinrichtung zur Verbindung der Leitung(en) mit der ersten Verbindungseinrichtung.

Eine derartige Zugentlastungsvorrichtung ist aus der europäischen Patentanmeldung EP 0 490 022 A2 bekannt und dient dort zur Zugentlastung von mit Gleitrinnen versehenen Flachbandkabeln, die an eine Geräteeinrichtung angeschlossen sind. Bei der bekannten Anordnung dienen die Gleitrinnen als Ersatz für eine konventionelle Kabelschleppkette, die ein Gleiten eines Flachbandkabelobertrums auf einem Flachbandkabeluntertrum ermöglichen, wenn eine bewegbare Geräteeinrichtung gegenüber einer mit dieser über ein Flachbandkabel verbundenen, feststehenden Geräteeinrichtung bewegt wird.

Bei der bekannten Anordnung besteht die erste Verbindungseinrichtung zur Verbindung des hier aus Gleitrinnen gebildeten Leitungskanals mit der Geräteeinrichtung aus einer Halteplatte, die über einen Abstandshalter mit der Geräteeinrichtung verbunden ist. Die weitere kraftschlüssige Verbindungseinrichtung besteht aus einer Kabelklemme, die Flachbandkabel klemmend aufnimmt und ihrerseits mit der Halteplatte verbunden ist. Durch Anordnung des Flachbandkabels in den damit verbundenen Gleitrinnen wirkt die Zugentlastung der Gleitrinnen im Bereich der Gleitrinnen auch als Zugentlastung für das Flachbandkabel. Die bekannte Lösung erweist sich daher als besonders vorteilhaft für die Zugentlastung von Flachbandkabeln, die mit dem aus Gleitrinnen gebildeten Leitungskanal fest verbunden sind.

Der vorliegenden Erfindung liegt die Aufgabe zugrunde, eine Zugentlastungsvorrichtung für eine Leitungsführungsanordung zu schaffen, die unabhängig von der Ausbildung des Leitungskanals und bei lose im Leitungskanal geführten Leitungen sowohl für eine wirksame Zugentlastung des Leitungskanals als auch für eine wirksame Zugentlastung der Leitungen sorgt.
Diese Aufgabe wird durch eine Zugentlastungsvorrichtung mit den Merkmalen des Anspruches 1 gelöst.

Erfindungsgemäß besteht die neben der ersten Verbindungseinrichtung vorgesehene, weitere Verbindungseinrichtung aus einer weichelastischen, oberflächenstumpfen, den radialen Zwischenraum zwischen der bzw. den Leitung(en) und der ersten Verbindungseinrichtung ausfüllenden Materialeinlage.

Die weichelastische, oberflächenstumpfe Materialeinlage ermöglicht eine kraftschlüssige, zugentlastende Aufnahme einzelner Leitungen, ohne daß eine besondere Anpassung an die Leitungsquerschnitte notwendig wäre. Selbst im Durchmesser unterschiedliche Leitungen können aufgrund der weichelastischen, sich dem Querschnitt der einzelnen Leitungen anpassenden Materialeinlage von dieser kraftschlüssig aufgenommen werden. Auch sorgt die Materialeinlage für eine von der Ausbildung des Leitungskanals unabhängige Zugentlastung der Leitungen. So kann der Leitungskanal, wie im Fall der bekannten Gleitrinnen, aus einem gleitfähigen Material gebildet sein und einzelne, durch Biegekerben voneinander abgeteilte Segmente aufweisen, die, wie in der genannten europäischen Patentanmeldung ausführlich dargelegt ist, als Schleppkettenersatz dienen. Andererseits kann bei der erfindungsgemäßen Zugentlastungsvorrichtung der Leitungskanal auch nach Art einer konventionellen Schleppkette ausgebildet sein, ohne daß dies die Wirkung der vom Leitungskanal unabhängigen, als Zugentlastung für die Leitungen dienenden, weiteren Verbindungseinrichtung beeinträchtigen würde.

Durch die Anordnung der Materialeinlage im radialen Zwischenraum zwischen der bzw. den Leitung(en) und der ersten Verbindungseinrichtung wird für die Materialeinlage eine Ausdehnungsbegrenzung geschaffen, so daß der für die zugentlastende Aufnahme der Leitungen durch die Materialeinlage notwendige Druck aufgebaut werden kann.

Bei der erfindungsgemäßen Materialeinlage wird die zur zugentlastenden Aufnahme notwendige Reibkraft einerseits durch ein flächiges Anpressen der Materialeinlage an den Leitungsumfang und andererseits durch eine oberflächenstumpfe Ausbildung der Materialeinlage, die somit einen hohen Reibungsbeiwert aufweist, erzeugt. Besonders vorteilhaft läßt sich eine derartige Materialeinlage durch die Verwendung von Moosgummi realisieren, das über beide vorgenannten Eigenschaften verfügt.

Bei einer bevorzugten Ausführungsform der Zugentlastungsvorrichtung weist die erste Verbindungseinrichtung ein Basisteil mit zwei das Basisteil im Querschnitt im wesentlichen U-förmig ergänzenden Seitenteilen auf. Hierbei dient das Basisteil der Verbindungseinrichtung zur Verbindung mit der Geräteeinrichtung, und die Seitenteile der Verbindungseinrichtung dienen zur Verbindung mit dem Leitungskanal. Eine derartige Ausführung der ersten Verbindungseinrichtung ermöglicht eine besonders einfache Integration des Leitungskanals in die Zugentlastungsvorrichtung.

Vorzugsweise sind dabei die Seitenteile als separate Teile ausgeführt und verfügen einerseits über Kopplungselemente einer ersten Kopplungseinrichtung zum Anschluß an das Basisteil und Kopplungselemente einer zweiten Kopplungseinrichtung zum Anschluß an den Leitungskanal. Diese vorteilhafte Ausgestaltung ermöglicht eine besonders einfache Montage der Zugentlastungsvorrichtung, derart, daß zunächst das Basisteil mit der Geräteeinrichtung und anschließend zum Anschluß des Leitungskanals an die Geräteeinrichtung der Leitungskanal über die Seitenteile mit dem Basisteil verbunden werden kann.

Diese Montage wird noch weiter erleichtert, wenn die erste Kopplungseinrichtung form- und kraftschlüssig und die zweite Kopplungseinrichtung lediglich formschlüssig ausgebildet ist. Da beide Kopplungseinrichtungen sich am selben Bauteil befinden, genügt die kraftschlüssige Sicherung der ersten Kopplungseinrichtung um hiermit gleichzeitig auch die zweite Kopplungseinrichtung zu sichern.

Vorzugsweise wird für die erste Kopplungseinrichtung eine Zapfenverbindung gewählt, die zur Sicherung mit einer Verschraubung versehen ist. Demhingegen kann für die zweite Kopplungseinrichtung lediglich eine Zapfenverbindung zwischen dem Seitenteil und dem Leitungskanal vorgesehen werden.

Die Seitenteile können so ausgebildet sein, daß sie in einem Leitungskanalaufnahmebereich das Leitungskanalende und in einem Materialeinlagenaufnahmebereich die Materialeinlage zwischen sich aufnehmen. Auch diese vorteilhafte Ausgestaltung der erfindungsgemäßen Zugentlastungsvorrichtung trägt zu einer Vereinfachung der Montage bei, da durch die Montage der Seitenteile am Basisteil sowohl die Verbindung mit der Materialeinlage als auch die Verbindung mit dem Leitungskanal in einem Arbeitsgang hergestellt werden kann.

Zur Erzeugung der die Ausdehnung der Materialeinlage begrenzenden Wirkung der ersten Verbindungseinrichtung kann ein Deckelteil vorgesehen werden, das zur Verbindung der Seitenteile in ihren dem Basisteil gegenüberliegenden Randbereichen dient. Dadurch, daß die Ausdehnungsbegrenzung für die Materialeinlage erst nach deren Anordnung zwischen den Seitenteilen geschaffen wird, wird das Einbringen der Materialeinlage zwischen die Seitenteile erheblich vereinfacht.

Wenn zur Verbindung des Deckelteils mit den Seitenteilen eine Rastverbindung vorgesehen wird, kann die Verbindung des Deckelteils mit den Seitenteilen durch einfaches Aufdrücken des Deckelteils auf die Materialeinlage bis zum Einrasten der Verbindung erfolgen, ohne daß, wie etwa bei einer Schraubverbindung, das Deckelteil entgegen dem elastischen Widerstand der Materialeinlage in der Verbindungsposition gehalten werden müßte, bis die Verbindung hergestellt ist.

Die Materialeinlage kann aus einem Materialblock gebildet sein, der in einer Zwischenebene einen Schlitz zur Aufnahme der Leitung(en) zwischen benachbarten Kontaktflächen aufweist. Hierdurch wird in besonders einfacher Weise eine einstückige Ausbildung der Materialeinlage ermöglicht.

Weiterhin besteht auch die Möglichkeit, die Materialeinlage aus mindestens zwei Materialblöcken zu bilden, die Leitung(en) zwischen benachbarten Kontaktflächen aufnehmen. Diese Ausführung der Materialeinlage hat den Vorteil, daß für die Materialeinlage einfach abgelängte Stücke eines Materialstranges verwendet werden können, ohne daß an diesen eine weitere Bearbeitung durchzuführen wäre.

Im Falle eines besonders großen Leitungsdurchmessers, so daß aufgrund der Elastizitätsgrenzen der Materialeinlage eine Anschmiegung der Materialeinlage um den gesamten Leitungsumfang nicht mehr möglich ist, kann die Materialeinlage mit einer an den Durchmesser der Leitung angepaßten Ausnehmung versehen sein. In jedem Fall wird aber besonders darauf hingewiesen, daß grundsätzlich gerade ein Vorteil der vorgeschriebenen Materialeinlage darin besteht, daß diese, ohne besondere Anpassungen vorzunehmen, für die gleichzeitige, kraftschlüssige Aufnahme von mehreren Leitungen mit unterschiedlichen Durchmessern geeignet ist.

Die erfindungsgemäße Zugentlastungsvorrichtung eignet sich auch in besonderem Maße für einen modularen Aufbau aus mehreren Zugentlastungsvorrichtungseinheiten, wenn mindestens ein Seitenteil zum seitlichen Anschluß eines weiteren Basisteils, eines weiteren Leitungskanals und eines weiteren Deckelteils beidseitig mit Kopplungselementen versehen ist, derart, daß mehrere Leitungsführungsanordnungen in einer gemeinsamen Ebene parallel zueinander angeordnet werden können.

Somit ist es möglich, die Zugentlastungsvorrichtung je nach Bedarf zu ergänzen, um eine Zugentlastung für eine beliebige Anzahl von Leitungskanälen mit darin befindlichen Leitungen zu schaffen.

Nachfolgend wird eine bevorzugte Ausführungsform der erfindungsgemäßen Zugentlastungsvorrichtung anhand der Zeichnungen näher beschrieben. Es zeigen:
**Fig. 1** eine aus zwei Zugentlastungsvorrichtungseinheiten aufgebaute Zugentlastungsvorrichtung in einer Explosionsdarstellung;
**Fig. 2** die in Figur 1 dargestellte Zugentlastungsvorrichtung in zusammengebautem Zustand und in perspektivischer Darstellung.

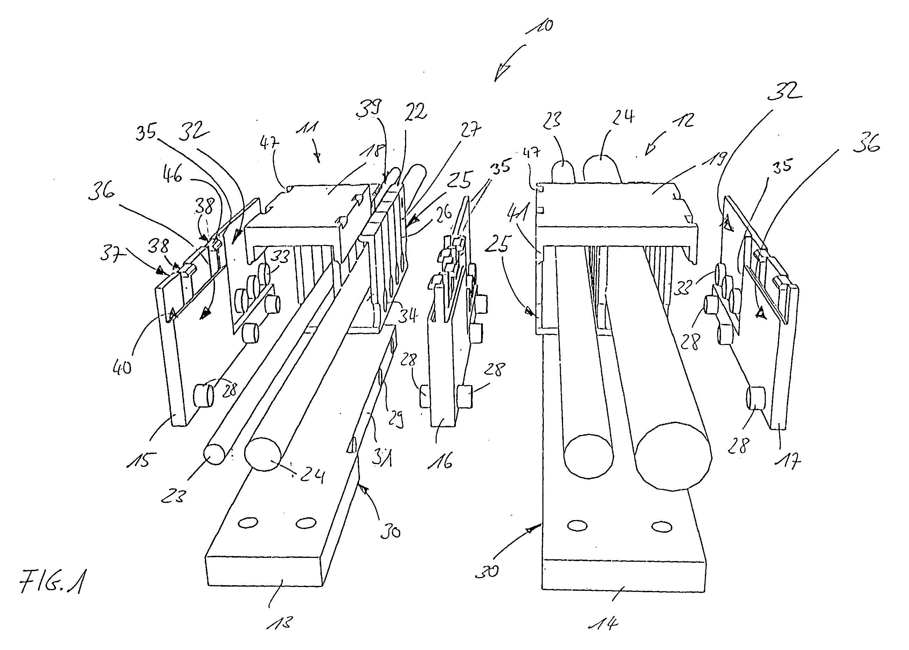

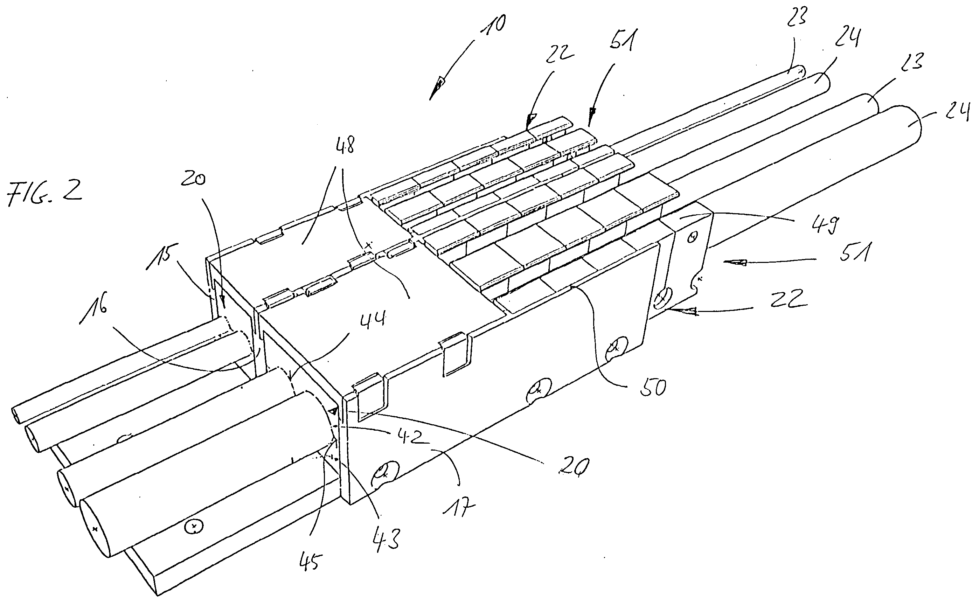

**Fig. 1** zeigt eine Zugentlastungsvorrichtung 10, die aus zwei Zugentlastungsvorrichtungseinheiten 11, 12 besteht, in Einzelteildarstellung. Die Zugentlastungsvorrichtungseinheiten 11, 12 weisen je ein Basisteil 13, 14, zwei Seitenteile 15, 16 bzw. 16, 17, ein Deckelteil 18, 19 und eine in **Fig. 2** in eingebautem Zustand dargestellte Materialeinlage 20 auf.

Zum Aufbau der Zugentlastungsvorrichtung 10 aus zwei Zugentlastungsvorrichtungseinheiten 11, 12 ist das Seitenteil 16 zweiseitig wirkend, d. h. sowohl als Seitenteil 16 für die Zugentlastungsvorrichtungseinheit 11 als auch als Seitenteil 16 für die Zugentlastungsvorrichtungseinheit 12 ausgebildet.

Jede Zugentlastungsvorrichtungseinheit 11, 12 dient zur kraftschlüssigen, zugentlastenden Aufnahme einer Leitungsführungsanordnung 51 mit einem Leitungskanal 22 und zwei lose im Leitungskanal 22 geführten Leitungen 23, 24. Bei den Leitungen 23, 24 kann es sich um elektrische Leitungen oder beliebige andere, flexible Leitungen handeln, die zur Verbindung einer feststehenden Geräteeinrichtung mit einer bewegbaren Geräteeinrichtung, die beide hier im einzelnen nicht dargestellt sind, dienen.

Von den Leitungskanälen 22, die in **Fig. 1** in Form eines in der Beschreibungseinleitung bereits erwähnten Schleppkettenersatzes ausgeführt sind, sind in **Fig. 1** lediglich die Leitungskanalenden 25 der aus einzelnen, durch Biegekerben 26 voneinander abgeteilten Segmenten 27 bestehenden Leitungskanäle 22 dargestellt. Die Segmente 27 weisen einen im wesentlichen rechteckförmigen Profilquerschnitt mit einem Schlitz 39 auf, der zur Einbringung der Leitungen 23, 24 von oben in den Leitungskanal 22 dient.

Die Seitenteile 15, 16, 17 weisen in den unteren Randbereichen ihrer den Basisteilen 13, 14 zugewandten Flächen Verbindungszapfen 28 auf, die in Zapfenlöcher 29 in Seitenflächen 30 der Basisteile 13, 14 einsetzbar sind. Beim Seitenteil 16 sind die Verbindungszapfen 28 beidseitig angeordnet. Um eine spaltfreie Verbindung der beiden Basisteile 13, 14 im Bereich des Seitenteils 16 miteinander zu ermöglichen, ist das Basisteil 13 in seiner Seitenfläche 30 mit einem der Dicke des Seitenteils 16 entsprechenden Flächenrücksprung 31 versehen.

Die Verbindungszapfen 28 können zur Sicherung der formschlüssigen Zapfenverbindung mit den Basisteilen 13, 14 mit einer hier nicht näher dargestellten Durchgangsbohrung versehen sein, die das Einschrauben einer ebenfalls nicht näher dargestellten Schraube durch die Verbindungszapfen 28 in das Basisteil 13 bzw. 14 ermöglicht.

Die Seitenteile 15, 16, 17 sind in einem Leitungskanalaufnahmebereich 32 mit weiteren Verbindungszapfen 33 versehen, die zur formschlüssigen Verbindung mit den Leitungskanalenden 25 dienen, welche hierzu entsprechende Zapfenlöcher 34 aufweisen. Darüber hinaus ist bei dem in **Fig. 1** dargestellten Ausführungsbeispiel im Leitungskanalaufnahmebereich 32 der Seitenteile 15, 16, 17 ein Flächenrücksprung 35 vorgesehen, der so beschaffen ist, daß das Leitungskanalende 25 bei an das Basisteil 13, 14 montierten Seitenteilen 15, 16 bzw. 16, 17 mit seinen Segmenten 27 bündig in der Ebene der Seitenteiloberfläche liegt. Das Seitenteil 16 weist sowohl die Verbindungszapfen 33 als auch den Flächenrücksprung 35 beidseitig auf.
In einem Materialeinlagenaufnahmebereich 36, der in der Darstellung gemäß **Fig. 1** dem Leitungskanalaufnahmebereich 32 vorgeordnet ist, ist im oberen Randbereich eine Rastverbindungszone 37 mit Rastzungen 38 vorgesehen. Die Rastverbindungszone 37 weist einen Flächenabsatz 40 auf, der als definierter Anschlag für das von oben zwischen die Seitenteile 15, 16 bzw. 16, 17 einzusetzende Deckelteil 18 bzw. 19 dient. Zum Anschlag an die Flächenabsätze 40 der Seitenteile 15, 16 bzw. 16, 17 sind die Deckelteile 18, 19 mit Anschlagstegen 41 versehen. Beim Seitenteil 16 ist die Rastverbindungszone 37 beidseitig vorgesehen.

Die Montage der Deckelteile 18, 19 erfolgt nach dem Anordnen der Materialeinlage 20 zwischen den Materialeinlageaufnahmebereichen 36 der Seitenteile 15, 16 bzw. 16, 17. Bei den in **Fig. 2** dargestellten Materialeinlagen 20 handelt es sich jeweils um aus zwei Materialblöcken 42, 43 zusammengesetzte Materialeinlagen. Die Materialblöcke 42, 43 weisen im hier nicht näher dargestellten unverformten Zustand eine quaderförmige Gestalt auf, und stimmen bzgl. ihrer Längenabmessung im wesentlichen mit der Länge des Deckelteils 18 bzw. 19 überein. Der in **Fig. 2** dargestellte, wellenförmige Verlauf der den Umfang der Leitungen 23, 24 umschließenden Kontaktflächen 44, 45 der Materialblöcke 42, 43 ergibt sich aufgrund deren elastischer Verformung beim Einsetzen des Deckelteils 18 bzw. 19 zwischen die Seitenteile 15, 16 bzw. 16, 17.

Das Einsetzen der Deckelteile 18, 19 erfolgt bis zum Anschlag der Anschlagstege 41 an die korrespondierenden Flächenabsätze 40 der Seitenteile 15, 16 bzw. 16, 17. Dabei rasten die Rastzungen 38 mit ihren Rastköpfen 46 in entsprechend ausgebildete Rastausnehmungen 47 an den Längsrändern der Deckelteile 18, 19 ein.

Aus der perspektivischen Darstellung der Zugentlastungsvorrichtung 10 in **Fig. 2** wird deutlich, daß die Deckelteile 18, 19 mit ihren Deckeloberflächen 48, die Leitungskanalenden 25 mit ihren Gleitflächen 49 und die Seitenteile 15, 16 und 17 mit ihren Oberkanten 50 in einer gemeinsamen Ebene angeordnet sind. Hierdurch wird sichergestellt, daß ein in **Fig. 2** nicht näher dargestellter Obertrum des Schleppkettenersatzes auch noch auf den Gleitflächen 49 der Leitungskanalenden 25 und darüber hinaus auf den Deckeloberflächen 48 der Deckelteile 18, 19 gleiten kann, ohne etwa durch vorstehende Oberkanten 50 der Seitenteile 15, 16, 17 behindert zu werden. Bei geeigneter Materialauswähl für die Deckelteile 18, 19 ist es somit möglich, die Oberfläche der Zugentlastungsvorrichtung 10 als erweiterte Gleitfläche zu nutzen.

## Patentansprüche

1. Zugentlastungsvorrichtung (10) für eine Leitungsführungsanordnung (51) mit einem Leitungskanal (22) für mindestens eine im Leitungskanal (22) geführte Leitung (23, 24), mit einer ersten kraftschlüssig wirkenden Verbindungseinrichtung (13, 15, 16; 14, 16, 17) zur Verbindung einer an die Leitung(en) (23, 24) anzuschließenden Geräteeinrichtung mit dem Leitungskanal (22) und einer weiteren kraftschlüssig wirkenden Verbindungseinrichtung (20) zur Verbindung der Leitung(en) (23, 24) mit der ersten Verbindungseinrichtung,
**dadurch gekennzeichnet,**
daß die weitere Verbindungseinrichtung mit einer weichelastischen, oberflächenstumpfen, den radialen Zwischenraum zwischen der bzw. den Leitung(en) und der ersten Verbindungseinrichtung ausfüllenden Materialeinlage (20) aufgebaut ist.

2. Zugentlastungsvorrichtung nach Anspruch 1, **dadurch gekennzeichnet,**
daß die Materialeinlage (20) aus Moosgummi gebildet ist.

3. Zugentlastungsvorrichtung nach Anspruch 1 oder 2,
**dadurch gekennzeichnet,**
daß die erste Verbindungseinrichtung (13, 15, 16; 14, 16, 17) ein Basisteil (13; 14) mit zwei das Basisteil (13; 14) im Querschnitt im wesentlichen U-förmig ergänzenden Seitenteilen (15, 16; 16, 17) aufweist, wobei das Basisteil (13; 14) zur Verbindung mit der Geräteeinrichtung dient und die Seitenteile (15, 16; 16, 17) zur Verbindung mit dem Leitungskanal (22) dienen.

4. Zugentlastungsvorrichtung nach Anspruch 3, **dadurch gekennzeichnet,**
daß die Seitenteile (15, 16, 17) als separate Teile ausgeführt sind, die über Kopplungselemente (28, 29) einer ersten Kopplungseinrichtung mit dem Basisteil (13, 14) und Kopplungselemente (33, 34) einer zweiten Kopplungseinrichtung mit einem Leitungskanalende (25) des Leitungskanals (22) verbindbar sind.

5. Zugentlastungsvorrichtung nach Anspruch 4, **dadurch gekennzeichnet,**
daß die erste Kopplungseinrichtung (28, 29) form- und kraftschlüssig und die zweite Kopplungseinrichtung (33, 34) formschlüssig ausgebildet ist.

6. Zugentlastungsvorrichtung nach Anspruch 5, **dadurch gekennzeichnet,**
daß zur Ausbildung der ersten Kopplungseinrichtung (28, 29) eine durch eine Verschraubung gesicherte Zapfenverbindung zwischen den Seitenteilen (15, 16; 16, 17) und dem Basisteil (13; 14) vorgesehen ist.

7. Zugentlastungsvorrichtung nach Anspruch 5 oder 6, **dadurch gekennzeichnet,**
daß zur Ausbildung der zweiten Kopplungseinrichtung (33, 34) eine Zapfenverbindung zwischen den Seitenteilen (15, 16; 16, 17) und dem Leitungskanalende (25) vorgesehen ist.

8. Zugentlastungsvorrichtung nach einem oder mehreren der vorangehenden Ansprüche, **dadurch gekennzeichnet,**
daß die Seitenteile (15, 16, 17) in einem Leitungskanalaufnahmebereich (32) das Leitungskanalende (25) und in einem Materialeinlagenaufnahmebereich (36) die Materialeinlage (20) zwischen sich aufnehmen.

9. Zugentlastungsvorrichtung nach Anspruch 8, **dadurch gekennzeichnet,**
daß die Seitenteile (15, 16; 16, 17) im Materialeinlagenaufnahmebereich (36) in ihren dem Basisteil (13; 14) gegenüberliegenden Randbereichen über ein Deckelteil (18; 19) miteinander verbindbar sind.

10. Zugentlastungsvorrichtung nach Anspruch 9, **dadurch gekennzeichnet,**
daß zur Verbindung des Deckelteils (18; 19) mit den Seitenteilen (15, 16; 16, 17) eine Rastverbindung (38, 46, 47) vorgesehen ist.

11. Zugentlastungsvorrichtung nach einem oder mehreren der vorangehenden Ansprüche,
**dadurch gekennzeichnet,**
daß die Materialeinlage (20) aus einem Materialblock besteht, der zur Aufnahme mindestens einer Leitung (23, 24) zwischen benachbarten Kontaktflächen in einer Zwischenebene mit einem Schlitz versehen ist.

12. Zugentlastungsvorrichtung nach einem oder mehreren der vorangehenden Ansprüche,
**dadurch gekennzeichnet,**
daß die Materialeinlage (20) mindestens zwei Materialblöcke (42, 43) zur zwischenliegenden Aufnahme mindestens einer Leitung (23, 24) zwischen benachbarten Kontaktflächen (44, 45) aufweist.

13. Zugentlastungsvorrichtung nach Anspruch 11 oder 12,
**dadurch gekennzeichnet,**
daß mindestens eine Kontaktfläche (44, 45) mit einer an den Durchmesser einer Leitung (23, 24) angepaßten Ausnehmung versehen ist.

14. Zugentlastungsvorrichtung nach einem oder mehreren der vorangehenden Ansprüche,
**dadurch gekennzeichnet,**
daß zur Ausbildung einer Zugentlastungsvorrichtung (10) aus mehreren Zugentlastungsvorrichtungseinheiten (11, 12) mindestens ein Seitenteil (16) zum seitlichen Anschluß eines weiteren Basisteils (13, 14), eines weiteren Leitungskanals (22) und eines weiteren Deckelteils (18; 19) beidseitig mit Kopplungselementen versehen ist, derart, daß mehrere Leitungsführungsanordnungen (51) in einer gemeinsamen Ebene parallel zueinander angeordnet werden können.
